# EUROPEAN PATENT SPECIFICATION

(11) **EP 0 372 827 B1**
(45) Date of publication and mention of the grant of the patent: **02.03.1994**
(21) Application number: 89312468.5
(22) Date of filing: 30.11.1989
(51) Int. Cl.: G03B 21/62, H04N 9/31

(54) **Rear-projection screen assembly**
Rückprojektionsschirm
Ecran de projection par l'arrière

(30) Priority: 09.12.1988 DK 6872/88
(43) Date of publication of application: 13.06.1990
(73) Proprietor: DAI NIPPON PRINTING CO., LTD., Tokyo 162-01 (JP)
(72) Inventor: Clausen, Johannes, DK-2920 Charlottenlund (DK); Clausen, Erik, DK-2820 Gentofte (DK)
(74) Representative: Barnard, Eric Edward

(56) References cited:
- EP-A- 0 077 117
- EP-A- 0 154 053
- AT-B- 180 418
- US-A- 4 054 907
- PATENT ABSTRACTS OF JAPAN, vol. 12, no. 483 (P-802)[3330], 16th December 1988; & JP-A-63 199 338

## Description

The present invention relates to a rear projection screen assembly of the kind comprising a lens sheet for converting light coming from behind into parallel rays of light, and a screen having parallel rows of vertical convex lenses on the rear side and parallel rows of vertical convex lenses on the front side.

Rear-projection screens of the above kind are known from U.S. Patent No. 4,432,010 issued February 14, 1984, and have been used for video-projection devices, micro film readers, data machines and flight simulators.

In the known rear-projection screens of the above kind, the front side faces the outside or room so that light naturally comes from the room into the screen. In the known screens, light from the room is, after penetrating into the screen, reflected internally in the screen and then emitted back into the room through the front surface of the screen, as will be described in detail hereinafter. This adversely affects the contrast of the picture produced by the screen.

The main object of the present invention is to eliminate the problem stated above and to increase the contrast of the picture produced. The present invention aims further at reducing a grouping of colours in the screen assembly.

According to the present invention, which is defined in claim 1, the above object is attained by further providing a foremost screen in front of the known screen mentioned before. The foremost screen has on its rear side an array of cylindrical convex lenses, the focal length of which is equal to the thickness of the foremost screen and which transmit light coming from behind to the front side of the foremost screen. The front side of the foremost screen has parallel rows of spaced ridges extending parallel to the rear convex lenses, and the ridges are separated by deep recesses of triangular cross section disposed between adjoining ridges so that the thickness of each ridge gradually decreases towards its top. The flanks of each ridge are covered with a light-impenetrable material while the top of the ridge is not covered to allow light to pass therethrough.

Preferably, the depth of the recesses is larger than twice the thickness of the ridges at their tops, and the depth of the recesses is larger than one-fourth of the thickness of the screen.

The present invention will be described in more detail below with reference to the drawings, in which:
Fig. 1 is a schematic plan view showing three projectors and a rear-projection screen assembly to which light is emitted from the projectors;
Fig. 2 is a perspective view of a rear-projection screen assembly according to the present invention;
Fig. 3 is a fragmentary schematic plan view, in section, of the rear-projection screen assembly, showing how light rays pass through the screen assembly;
Fig. 4 is a view similar to Fig. 3, showing how light rays from the front side are absorbed by the black colour layers;
Fig. 5 is a view of a foremost screen with preferred dimensions, showing how light rays from the front side are transmitted into the screen and then reflected to be absorbed by the black colour layers;
Figs. 6, 7 and 8 are views used for comparison of effectiveness of three foremost screens of different dimensions;
Fig. 9 shows typical dimensions of an intermediate screen;
Fig. 10 is a horizontal section of a known rear-projection screen;
Figs. 11 and 12 are views similar to Fig. 10, showing how light passes through the known screen; and
Fig. 13 is a view similar to Fig. 11, showing how light passes through and is reflected in the known screen.

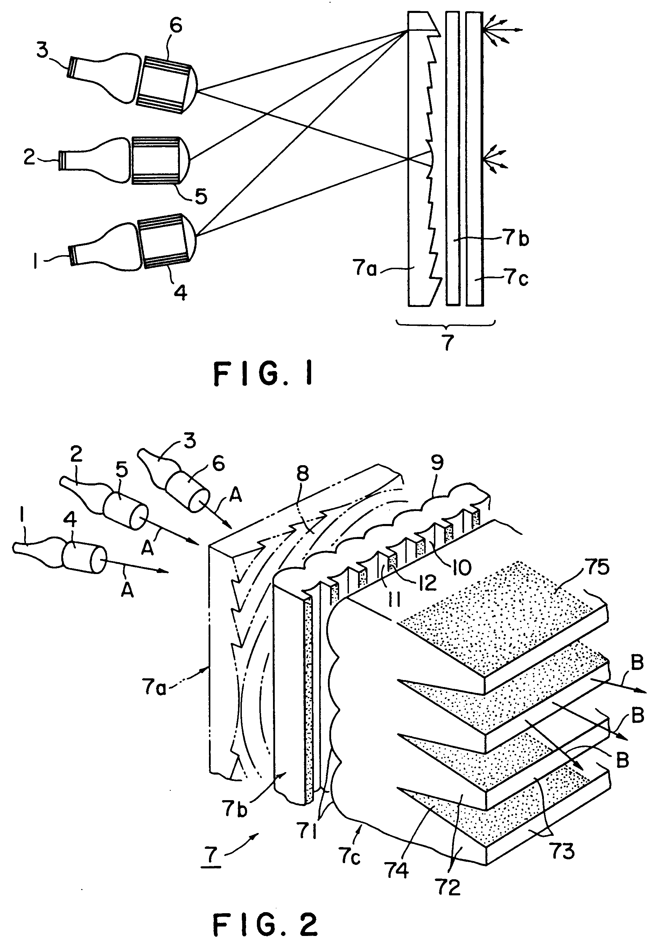

Referring to Fig. 1, there are illustrated three projectors 1, 2 and 3 which project TV-pictures towards the rear side of a rear-projection screen assembly 7. These projectors emit red, green and blue light, respectively. The three projectors are placed next to each other horizontally, so that the middle projector 2, most often the green projector, has its optical axis perpendicular to the screen assembly 7. The screen assembly 7 consists of a Fresnel lens sheet 7a for paralleling light from the projectors 1, 2 and 3 and screens 7b and 7c for refracting the paralleled light.

The optical axes of the projectors 1 and 3 often form an angle of 6°-10° with the optical axis of the projector 2. By means of the three projectors 1, 2 and 3, as well as projection lenses 4, 5 and 6 mounted in front of them, it is possible to form - proportional to the projectors - an enlarged picture on the screen 7c.

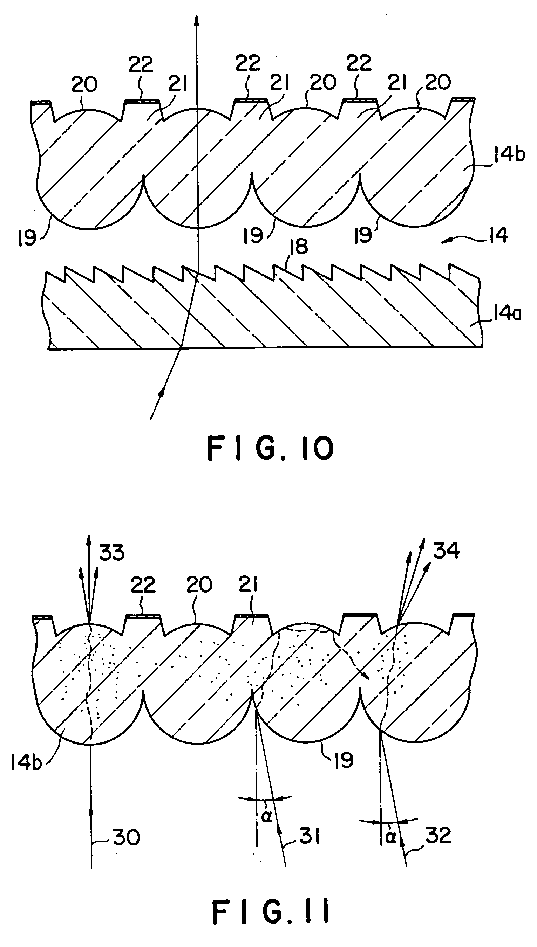

A known rear-projection screen assembly 14 is constructed to have a rear Fresnel lens sheet 4a and a front screen 4b as shown in Fig. 10 and as disclosed in U.S. Patent No. 4,432,010 issued February 14, 1984. In Fig. 10, the Fresnel lens sheet 14a has a Fresnel grooves 18, while the front screen 14b, which is a picture forming screen, comprises parallel convex lenses or leticular lenses 19 extending vertically on the rear side of the screen 14b, parallel convex (lenticular) lenses 20 extending vertically on the front side of the screen 14b at horizontally spaced disposition, and parallel ridges 21 disposed between adjoining convex lenses 20, the ridges 21 also extending vertically and having on their tops black strips 22 for enhancing the picture contrast. The Fresnel lens 18 is provided to convert the light from the projectors into parallel rays of light. The lenses 19 serve the purpose of spreading the light in horizontal directions.

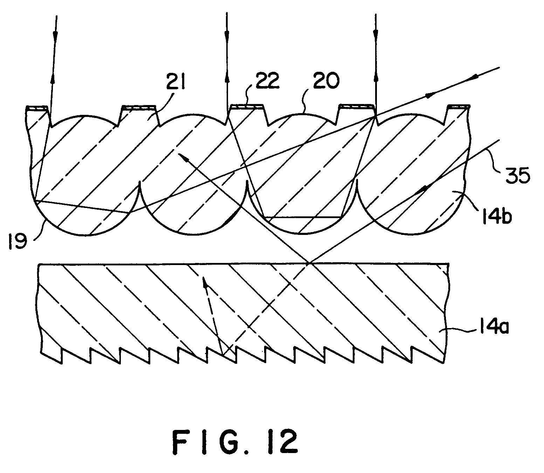

The screen 14b is mixed with refractive powdered particles or SiO₂ for spreading the light in vertical directions. The refractive particles may be evenly distributed over the entire thickness of the screen 4b as illustrated in Fig. 11, in which light beams 30 and 32 from behind advance into the screen 4b and then emitted to the outside as bundles of vectors 33 and 34. Fig. 11 shows that the light beam 31 originating from the red or blue light source is lost due to internal reflection.

It is known among professionals that the picture forming ability of a rear-projection screen is reduced when it is used in a very illuminated room. This is because light which has entered the screen 14b from the front side undergoes internal reflection and is directed to the outside at different positions as shown in Fig. 12.

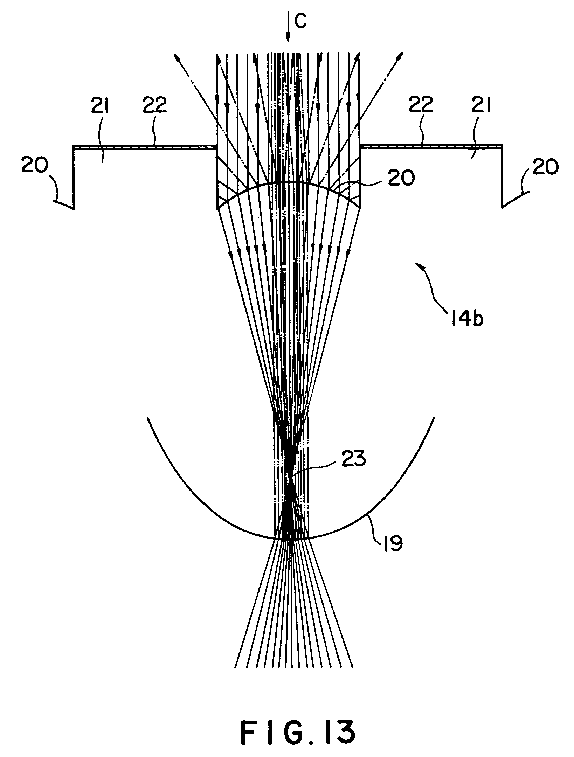

Furthermore, as shown in Fig. 13, room light directed to the front surface of each convex lens 20 perpendicularly to the major plane of the screen 14b as indicated by letter C is condensed at 23 in the screen and then reflected internally by the rear convex lens 19 to be emitted back into the room as indicated by chain lines.

It will be understood from the foregoing that in the known rear-projection screen, light coming from the front side of the screen is, after internal reflection in the screen, emitted back to the front side with diffusion, thereby reducing the contrast of the screen. In order to reduce this adverse effect, the width of the front convex lenses 20 might be reduced but this would result in reduction of the overall area through which the picture forming light is emitted to the front side.

These problems are solved by the present invention which will be described below with reference to Figs. 2 through 9.

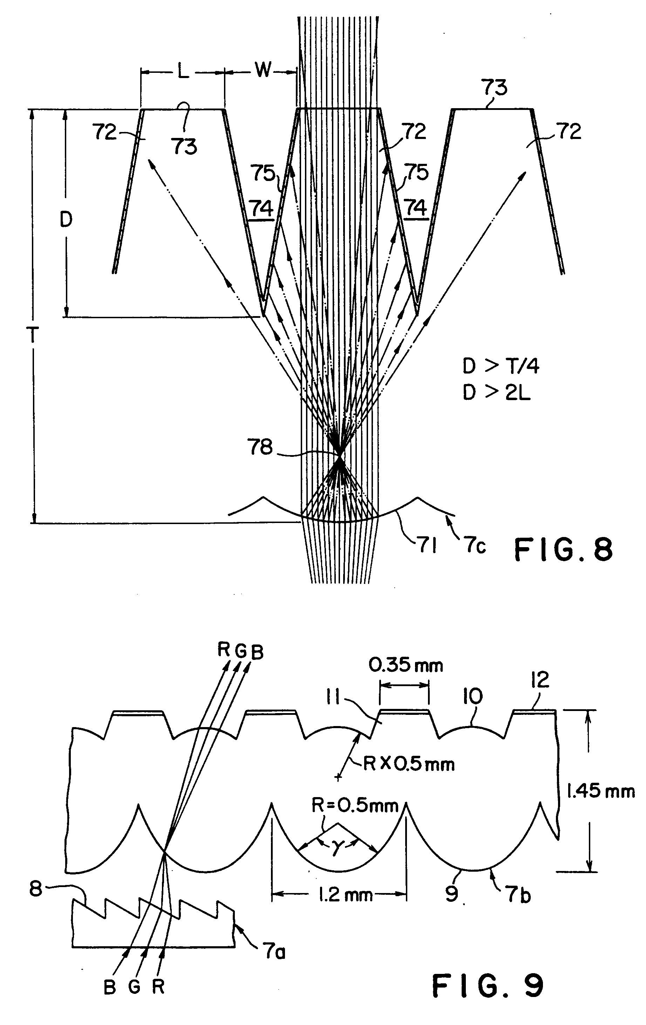

Fig. 2 shows an embodiment of the rear-projection screen assembly according to the present invention. In Fig. 2, the screen assembly 7 comprises the Fresnel lens sheet 7a and the screens 7b and 7c. The intermediate screen 7b is of the same construction as that shown in Fig. 9 and has vertical convex lenses 9 on the rear side, vertical convex lenses 10 on the front side, ridges 11 between adjoining convex lenses 10, and light-impenetrable strips 12 on the tops of the ridges 11. The foremost screen 7c is made of a transparent material, for example, an acrylic resin. The rear side of the screen 7c, that is, the side facing the projectors 1, 2 and 3, is provided with parallel horizontal convex lenses 71, the focal point of which is located on the tops 73 of parallel ridges 72 on the front side of the screen 7c. Recesses 74 are formed between adjoining ridges 72. The convex lenses 71, the ridges 72 and the recesses 74 extend parallel to a line connecting the three projectors 1, 2 and 3 mutually. The ridges 72 are disposed at height positions corresponding to the convex lenses 71. The flank surfaces of the ridges 72 are applied with a light-impenetrable material 75, for example of black colour, to increase the contrast. The thickness of the ridges 72 gradually decreases towards the tops 73 so that the recesses 74 are triangular in cross section. The light-impenetrable material 75 may fill the recesses 74 completely.

The light beams A from the projectors 1, 2, and 3 are converted into parallel rays by the Fresnel lens sheet 7a disposed behind the intermediate screen 7b. After passing through the screen 7b, the light beams are spreaded in horizontal directions and transmitted into the screen 7c. The beams, passing through the screen 7c, are emitted to the outside as indicated at B through the tops 73 of the ridges 72.

In the case of a rear light projection TV, the three projectors 1, 2 and 3 are normally placed with the centre line connecting these horizontally. If the screen 7c is turned by an angle of 90° so that the lenses 71 and the ridges 72 form an angle of 90° compared to the connecting line of the projectors, the light beams from the projector 1 and 3 will be deflected so that they hit the inner sides of the flanks of the ridges 72 and are adsorbed by the light-impenetrable material 75.

When the screen 7c is placed as shown with the lenses 71 and the ridges 72 extending parallel with the line connecting the projectors, light beams from the projectors 1 and 3 will also be transmitted through the tops 73, because they have no limitations to diffusion at horizontal level. For diffusion of the light horizontally and vertically, refractive particles may be mixed in the tops 73 of the ridges.

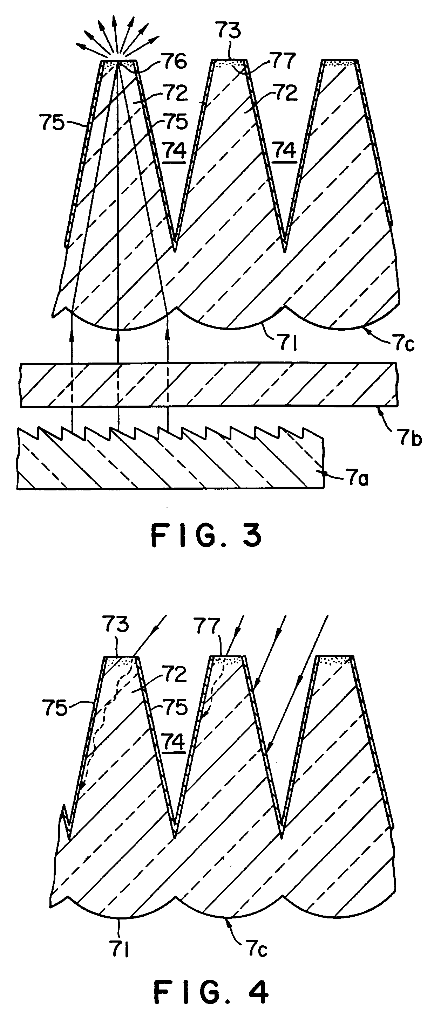

In Fig. 3 are shown paths of rays of light through the screen 7c. It will be seen that the light beams from the projectors are converted into parallel rays by the Fresnel lens sheet 7a and, after passing through the screen 7b, transmitted into the screen 7c in which the rays are condensed at the focal points 76 each located at the top 73 of each ridge 72. Thereafter, the rays are diffused by means of refractive particles 77 mixed in the region of the top 73 and emitted to the outside as shown.

It is not indispensable for the invention whether the ridge top 73 is plane or has convex or concave form, or whether the refractive particles are placed at or on the top 73.

Fig. 4 shows a view for illustration of how light beams from the room are absorbed by the light-impenetrable material 75 on the flanks of the ridges 72.

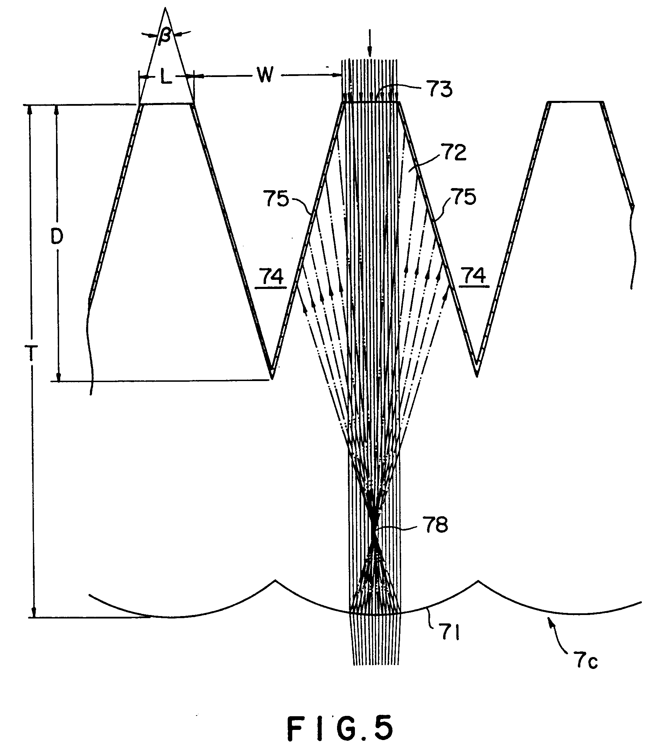

Fig. 5 shows a preferred example of dimensional relations of the screen 7c used in the present invention. In Fig. 5, L is the thickness of each ridge 72 at its top 73; W, the width of each recess 74 between adjoining tops 73 of the ridges; D, the depth of the recess 74; and T, the thickness of the screen 7c.

It has been found preferable in the present invention that the depth D of the recesses 74 be larger than twice the thickness L of the ridges. That is, D > 2L.

Furthermore, the depth D of the recesses 74 is preferably larger than one-fourth of the thickness T of the screen, that is, D > T/4.

In the specific example shown in Fig. 5, D is approximately five times as much as L (D ≐ 5L). As shown in this figure, parallel rays of light coming from the room through the ridge top 73 advance straight to the inner surface of the rear convex lens 71 and are reflected thereby to be condensed at a point 78 and then diverged towards the flanks of the ridges 72 as shown by the chain lines. It will be seen that the reflected diverging light rays hit the light-impenetrable layers 75 and are absorbed thereby so that the internally reflected rays are not transmitted to the outside whereby there is no adverse effect on the contrast of the picture. In this specific example, the condition D > T/4 is satisfied. It will be understood that the thickness L of the ridges 72 is not unduly reduced whereby ample area for the outgoing picture forming rays is provided.

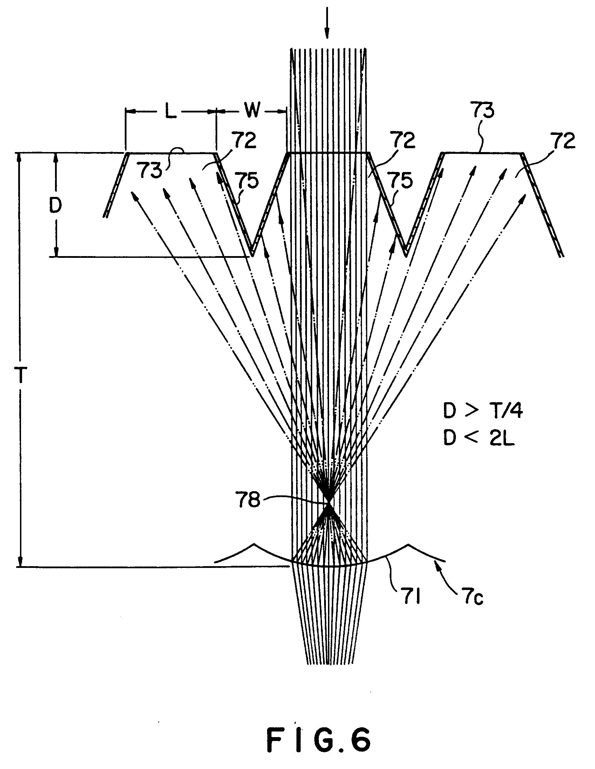

In the example shown in Fig. 6, the condition of D > T/4 is satisfied. However, the condition D > 2L is not met but D < 2L. It will be seen that in this example the reflected rays diverging from the point 78 reach the adjoining ridges 72 and are emitted outwards through the tops 73 of the adjoining ridges. This example of comparison is not desirable from the viewpoint of preventing adverse effect on the contrast.

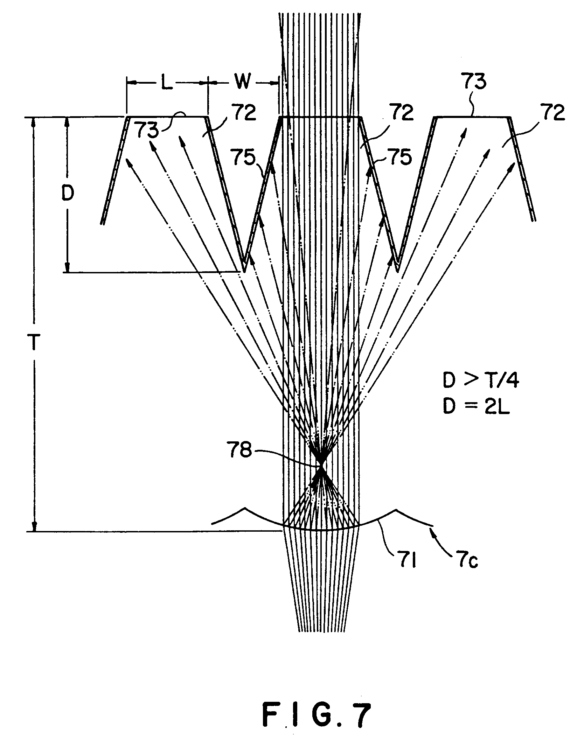

The example of comparison shown in Fig. 7 is also not desirable because D is equal to 2L although the other condition is satisfied. It will be seen that the reflected diverging rays reach the adjoining ridge tops 73 to be emitted outwards therethrough.

Fig. 8 shows a good example of the screen 7c wherein all the dimensional conditions are satisfied. It will be seen that only a small portion of the reflected diverging rays is directed to the adjoining ridges 72 and a major portion of the reflected rays impinges upon and is absorbed by the light-impenetrable layers 75.

The intermediate screen 7b is useful in this invention for the reasons set out below. The constructors of projection televisions aim at reducing the dimensions of the television sets by making the angle α (Fig. 11) between the axes of the three light sources larger, which makes it necessary to use the intermediate screen 7b which, as shown in Fig. 9, functions for parallelling the light from the three light sources B(lue), G(reen) and R(ed). If the intermediate screen 7b is not used, an observer watching the television set from the front would otherwise observe a grouping of colours in the screen 7c in such a manner that one half of the screen would be dominated by red light and the other half would be dominated by blue light. For the purpose of reducing a grouping of colours, the focal points of the rear convex lenses 9 are preferably located in the vicinity of the front convex lenses 10.

### Example 1

By means of a tool with a profile as illustrated in Fig. 5 was cast a 3-mm thick plate of PMMA with 120 g SiO₂ per m² having a grain size of 15-40 µm. The pitch of the lenses 71 was 1.2 mm. Radius of curvature of the lens 71 was 1.0 mm, and the angle β was 24°. The width W of the recesses 74 was 1.65 mm. The thickness L of the lenses 72 was 0.3 mm. The depth D of the recesses was 1.6 mm and the thickness T of the screen was 3.0 mm. After the casting mould had been filled it was placed horizontally, with the lenses 72 directed downwards, whereby the refractive powder sedimented so that it settled as a well formed layer at the surface 73 of the lens 72, with a thickness less than 100 µm. When the screen was taken out of the casing mould, the lens tops 73 were applied with PVA (Polyvinyl alcohol). Then black colour was applied on the flanks of the lenses 72.

After an appropriate drying time the PVA film was removed from the tops 73.

A screen with specifications indicated in Fig. 9 was moulded as the intermediate screen 4b. The convex lenses 9 and 10 may be parabolic.

The screen assembly thus fabricated showed the following parameters:
Peak Gain: 4.0
1/2 Horizontal peak gain: 38°
1/2 Vertical peak gain: 10°
Peak gain means the direct-transparent light measured as normal to the surface in comparison to a known reference (MgCo₃).

Contrast conditions when the TV is switched off:

| Screen, as Ex. 1 | | Known, black-striped screen, as shown in Fig. 10 | |
|---|---|---|---|
| Screen | White reference | Screen | White reference |
| 1.2 | 59 | 9.4 | 60 |

The screen showed extreme high contrast and good efficiency so that the picture was made visible over a big visual angle, horizontally as well as vertically at a visual field ± 90°.

### Example 2

In this example a PMMA plate was cast as described in Example 1. The pitch of the lenses 71 was 1.2 mm. Radius of the lens 71 was 1.0 mm. The depth D was 1.6 mm. The angle β was 20°. The thickness L of the lens top 73 was 0.6 mm.

After casting a film of PVA was applied to the lens tops 73. The other conditions were as in Example 1.

The screen assembly showed the following parameters:
Peak Gain: 4.2
1/2 Horizontal peak gain: 40°
1/2 Vertical peak gain: 9°
Contrast conditions when the TV is switched off:

| Screen, as Example 1 | | Known, black-striped screen, as shown in Fig. 10 | |
|---|---|---|---|
| Screen | White reference | Screen | White reference |
| 1.5 | 61 | 9.6 | 61 |

The screen showed an extremely high contrast and good efficiency, so that the picture was made visible over a big visual angle, horizontally as well as vertically at a visual field ± 90°.

### Example 3

In this example the dimensions were as in Example 1. The screen 7c was extruded by clear PMMA without diffusing powder. Then the tops 73 of the ridges were applied with a film of PVA. The flanks of the ridges were sprayed with black colour. Then the PVA film on the tops of the ridges was removed. A mixture of lacquer with a diffusing medium was coated on the entire surface.

The screen showed the same parameters as Example 1.

### Example 4

This example was carried out as in Example 1, with the modification, however, that black paint was applied to the ridges 11 of the intermediate screen 7b and covered 40 per cent of the screen area. The screen assembly showed the following parameters:
Peak Gain: 4.0
1/2 Horizontal peak gain: 38°
1/2 Vertical peak gain: 10°
Contrast conditions when the TV is switched off:

| Screen accoding to Example 4 | | Known, black-striped screen according to Fig. 10 | |
|---|---|---|---|
| Screen | White reference | Screen | White reference |
| 0.8 | 63 | 9.6 | 61 |

It will be understood from the foregoing that the present invention provides an excellent rear-projection screen which can prevent decrease of contrast by internally reflected light while providing ample width of the ridge tops to allow the picture forming light from behind to pass to the front side. It will also be understood that the provision of the light-impenetrable layers on only the flanks of the ridges serves to allow the picture forming light from behind to pass to the front side without causing the light to be absorbed by the light-impenetrable layers.

## Claims

1. A rear-projection screen assembly comprising a rearmost lens sheet (7a) defining a rear side of said assembly, a foremost screen (7c) defining a front side of said assembly and an intermediate screen (7b) placed between said rearmost sheet (7a) and said foremost screen (7c) in parallel relationship with both of them, wherein:
said rearmost lens sheet (7a) is a lens sheet for converting light rays projected onto said rear side of the assembly into parallel light rays;
said intermediate screen (7b) has on its front side, facing said foremost screen (7c), an array of cylindrical convex lenses (10) extending parallel to a first direction, and on its rear side, opposite to said front side, another array of cylindrical convex lenses (9) extending parallel to said first direction; and
said foremost screen (7c) has on its rear side, facing said intermediate screen (7b), an array of cylindrical convex lenses (71) extending parallel to a second direction which is perpendicular to said first direction, said lenses (71) having a focal length equal to the thickness (T) of said foremost screen (7c) and being arranged to transmit light coming from said intermediate screen to the front side of said foremost screen;
said assembly being characterised in that:
said intermediate screen (7b) has on said front side ridges (11) extending parallel to said first direction and alternately disposed between said cylindrical lenses (10), said ridges (11) having light-impermeable strips (12) applied on their tops; and in that
said foremost screen (7c) has on its front side parallel rows of ridges (72) extending parallel to said second direction, said ridges (72) being separated by deep recesses (74) of triangular cross section disposed between adjoining ridges so that the thickness of each ridge gradually decreases towards its top (73), and that the flanks of each ridge (72) are covered with a light-impenetrable material (75) while the top (73) of the ridge is not covered to allow light to pass therethrough.

2. The screen assembly according to Claim 1, wherein the depth (D) of the recesses (74) is larger than twice the thickness (L) of the ridges (72) at their tops, and is larger than one-fourth of the thickness (T) of the foremost screen.

3. The screen assembly according to Claim 1, wherein refractive powder is placed in the top (73) of each ridge (72).

4. The screen assembly according to claim 1, wherein the recesses (74) are filled with said light-impermeable material (75).

5. The screen assembly according to claim 1, wherein the top (73) of each ridge (72) is plane.

6. The screen assembly according to claim 1, wherein the top (73) of each ridge (72) is convex.

7. The screen assembly according to claim 1, wherein the top (73) of each ridge (72) is concave.

## Patentansprüche

1. Rückprojektionsschirmaufbau mit einer hinteren Linsenplatte (7a), welche die Rückseite dieses Aufbaus begrenzt, einem vorderen Schirm (7c) welche die Vorderseite dieses Aufbaus begrenzt, und einem Zwischenschirm (7b), der zwischen der hinteren Platte (7a) und dem vorderen Schirm (7c) sowie parallel zu diesen beiden angeordnet ist, wobei:
diese hintere Linsenplatte (7a) eine Linsenplatte zur Umwandlung auf die Rückseite des Aufbaus projizierter Lichtstrahlen in parallele Lichtstrahlen ist;
dieser Zwischenschirm (7b) auf seiner dem vorderen Schirm (7c) zugewandten Vorderseite eine sich parallel zu einer ersten Richtung erstreckende Anordnung zylindrischer Konvexlinsen (10) sowie auf seiner der besagten Vorderseite gegenüberliegenden Rückseite eine weitere, sich parallel zu jener ersten Richtung erstreckende Anordnung zylindrischer Konvexlinsen (9) aufweist; und
dieser vordere Schirm (7c) auf seiner dem besagten Zwischenschirm (7b) zugewandten Rückseite eine sich parallel zu einer zweiten, zu jener ersten Richtung senkrecht stehenden Richtung erstreckende Anordnung zylindrischer Konvexlinsen (71) aufweist, wobei diese Linsen (71) eine Brennweite besitzen, die gleich der Dicke (T) jenes vorderen Schirms (7c) ist, und so angeordnet sind, daß sie von besagtem Zwischenschirm kommendes Licht zur Vorderseite jenes vorderen Schirms durchlassen;
wobei dieser Aufbau dadurch gekennzeichnet ist, daß:
jener Zwischenschirm (7b) auf seiner Vorderseite sich parallel zu der besagten ersten Richtung erstreckende und abwechselnd zwischen jenen zylindrischen Linsen (10) angeordnete Stege (11) aufweist, wobei diese Stege (11) auf ihren Enden angebrachte lichtundurchläßige Streifen (12) aufweisen; und daß
jener vordere Schirm (7c) auf seiner Vorderseite parallele Reihen sich parallel zu der besagten zweiten Richtung erstreckender Stege (72) aufweist, wobei diese Stege (72) so durch zwischen benachbarten Stegen liegende, tiefe Einschnitte (74) dreieckigen Querschnitts getrennt sind, daß die Dicke jedes Steges zu seinem Ende (73) hin allmählich abnimmt, und daß die Flanken jedes Steges (72) mit einem lichtundurchlässigen Stoff (75) bedeckt sind, während das Ende (73) des Steges unbedeckt ist, um Licht durchzulassen.

2. Schirmaufbau nach Anspruch 1, wobei die Tiefe (D) der Einschnitte (74) größer als die doppelte Dicke (L) der Stege (72) an deren Enden und größer als ein Viertel der Dicke (T) des vorderen Schirms ist.

3. Schirmaufbau nach Anspruch 1, worin Brechungspulver im Ende (73) jedes Steges (72) vorliegt.

4. Schirmaufbau nach Anspruch 1, worin die Einschnitte (74) mit jenem lichtundurchläßigen Stoff (75) gefüllt sind.

5. Schirmaufbau nach Anspruch 1, worin das Ende (73) jedes Steges (72) eben ist.

6. Schirmaufbau nach Anspruch 1, worin das Ende (73) jedes Steges (72) konvex ist.

7. Schirmaufbau nach Anspruch 1, worin das Ende (73) jedes Steges (72) konkav ist.

## Revendications

1. Assemblage d'écran de projection par l'arrière comprenant une feuille de lentilles la plus en arrière (7a) définissant un côté arrière dudit assemblage, un écran le plus en avant (7c) définissant un côté avant dudit assemblage et un écran intermédiaire (7b) placé entre ladite feuille la plus en arrière (7a) et ledit écran le plus en avant (7c), parallèlement aux deux, dans lequel :
ladite feuille de lentilles la plus en arrière (7a) est une feuille de lentilles permettant de convertir les rayons lumineux projetés sur ledit côté arrière de l'assemblage en rayons lumineux parallèles ;
ledit écran intermédiaire (7b) comporte sur son côté avant qui fait face audit écran le plus en avant (7c) un réseau de lentilles convexes cylindriques (10) s'étendant parallèlement à une première direction et sur son côté arrière opposé audit côté avant, un autre réseau de lentilles convexes cylindriques (9) s'étendant parallèlement à ladite première direction ; et
ledit écran le plus en avant (7c) comporte sur son côté arrière qui fait face audit écran intermédiaire (7b) un réseau de lentilles convexes cylindriques (71) s'étendant parallèlement à une seconde direction qui est perpendiculaire à ladite première direction, lesdites lentilles (71) présentant une distance focale égale à l'épaisseur (T) dudit écran le plus en avant (7c) et étant agencées pour transmettre de la lumière provenant dudit écran intermédiaire jusqu'au côté avant dudit écran le plus en avant,
ledit assemblage étant caractérisé en ce que :
ledit écran intermédiaire (7b) comporte sur ledit côté avant des nervures (11) s'étendant parallèlement à ladite première direction et disposées en alternance entre lesdites lentilles cylindriques (10), lesdites nervures (11) comportant des bandes imperméables à la lumière (12) appliquées sur leurs sommets ; et en ce que
ledit écran le plus en avant (7c) comporte sur son côté avant des rangées parallèles de nervures (72) s'étendant parallèlement à ladite seconde direction, lesdites nervures (72) étant séparées par des évidements profonds (74) présentant une section en coupe transversale triangulaire qui sont disposés entre des nervures contigues de telle sorte que l'épaisseur de chaque nervure décroisse progressivement en direction de son sommet (73), et en ce que les flancs de chaque nervure (72) sont recouverts par un matériau imperméable à la lumière (75) tandis que le sommet (73) de la nervure n'est pas recouvert pour permettre à la lumière de passer au travers.

2. Assemblage d'écran selon la revendication 1, dans lequel la profondeur (D) des évidements (74) est supérieure à deux fois l'épaisseur (L) des nervures (72) au niveau de leurs sommets et est supérieure à un quart de l'épaisseur (T) de l'écran le plus en avant.

3. Assemblage d'écran selon la revendication 1, dans lequel une poudre réfringente est placée au sommet (73) de chaque nervure (72).

4. Assemblage d'écran selon la revendication 1, dans lequel les évidements (74) sont remplis par ledit matériau imperméable à la lumière (75).

5. Assemblage d'écran selon la revendication 1, dans lequel le sommet (73) de chaque nervure (72) est plan.

6. Assemblage d'écran selon la revendication 1, dans lequel le sommet (73) de chaque nervure (72) est convexe.

7. Assemblage d'écran selon la revendication 1, dans lequel le sommet (73) de chaque nervure (72) est concave.
